# EUROPEAN PATENT SPECIFICATION

(11) **EP 3 825 347 B1**
(45) Date of publication and mention of the grant of the patent: **09.10.2024**
(21) Application number: 19210707.6
(22) Date of filing: 21.11.2019
(51) Int. Cl.: C08J 5/04, B32B 27/32, C08F 110/02, C08L 23/06

(54) **FIBER COMPOSITES AND METHODS FOR MAKING THE SAME**
FASERVERBUNDWERKSTOFFE UND HERSTELLUNGSVERFAHREN DAFÜR
COMPOSITES DE FIBRES ET LEURS PROCÉDÉS DE FABRICATION

(43) Date of publication of application: 26.05.2021
(73) Proprietor: SABIC Global Technologies B.V., 4612 PX Bergen op Zoom (NL)
(72) Inventor: KHANI, Ali, 8219 PZ Lelystad (NL); VAN OPZEELAND, Jan, 8219 PZ Lelystad (NL); VANDORMAEL, Bart, 8219 PZ Lelystad (NL); WISMANS, Joris, 8219 PZ Lelystad (NL)
(74) Representative: Sabic Intellectual Property Group

(56) References cited:
- DATABASE WPI Week 201854, Derwent World Patents Index; AN 2018-491977, XP002798425
- DATABASE WPI Week 201610, Derwent World Patents Index; AN 2015-83179P, XP002798426
- DATABASE WPI Week 201427, Derwent World Patents Index; AN 2014-A57995, XP002798427
- DATABASE WPI Week 201438, Derwent World Patents Index; AN 2014-L12786, XP002798428

## Description

### BACKGROUND

### 1. Field of Invention

The present invention generally concerns fiber composites. In particular, the invention concerns fiber composites containing at least 60 wt. %, preferably 60 wt. % to 80 wt. % of a fiber material and a high density polyethylene (HDPE) resin composition containing a HDPE polymer and a metallocene polyethylene wax, and methods for producing the same.

### 2. Description of Related Art

Fiber composites such as unidirectional fiber tapes ("UD tapes") can be used to make structures having advantageous structural characteristics, such as high stiffness and high strength, as well as low weight, when compared to structures formed from conventional materials. As a result, UD tapes are used in a variety of applications across a wide range of industries, including the automotive, aerospace, and consumer electronics industries. Depending on its application, a UD tape may need to meet a number of criteria, including those relating to strength, stiffness, size, weight, and/or the like. Other fiber composites with high stiffness, high strength and low weight also have use in electronic and electrical devices such as notebook personal computers, e-books, and tablet personal computers, where metallic body panels are being replaced by materials that are lighter in weight but offer a robust combination of mechanical properties.

Fiber composites made with conventional production techniques are unable to meet the desired criteria. For example, UD tape made with conventional solvent based and aqueous based impregnation techniques are undesirably expensive and/or are complicated to make. UD tape made with conventional melt impregnation technology may have low fiber weight fraction, uneven density, and high weight. A matrix material with low viscosity but high melt strength is required for melt impregnation techniques. Melt impregnation with a matrix material having relatively high viscosity and/or low melt strength can result in necking and breakage of the molten matrix material film formed during casting and can result in a UD tape with dry spot, incorrect position and amount of the matrix material. Various attempts have been made to produce materials that address the quality of the matrix material. US Patent Publication 20100261835A1 discloses a relatively low viscosity polymer mixture. The polymer mixture can include two polymers with similar monomer units but different properties. The ratio of the two polymers in the mixture depends of the melt flow index of the polymers.

While various fiber composites are known, there is a continuing interest in developing fiber composites which have advantageous physical and chemical properties such as relatively less dry spot and uniform density.

### SUMMARY

Solutions to at least some of the deficiencies noted above have been discovered. In particular, it has been discovered that fiber composites containing greater than 60 wt. % of a fiber material and a matrix with a HDPE resin composition containing a HDPE polymer and a metallocene polyethylene wax exhibit many desirable properties. In some aspects, the fiber composites, such as UD tapes, can be made by a melt impregnation process.

In one aspect of the present invention, a fiber composite is described. The fiber composite contains at least 60 wt. % of a fiber material based on total weight of the composite, and a HDPE resin composition. In some aspects, the fiber composite can include 60 wt. % to 80 wt. %, or 70 wt. % to 80 wt. %, or 75 wt. % to 80 wt. % of the fiber material based on total weight of the composite. In some aspects, the fiber composite can include 20 wt. % to 40 wt. %, or 20 wt. % to 30 wt. %, or 20 wt. % to 25 wt. % of the HDPE resin composition based on total weight of the composite. The HDPE resin composition contains a HDPE polymer and a polyethylene wax. In some aspects, the polyethylene wax can be a microcrystalline polyethylene wax. The polyethylene wax is a metallocene polyethylene wax. The HDPE resin composition - includes 50 wt. % to 99 wt. %, or 50 wt. % to 98.5 wt. %, or 50 wt. % to 98 wt. %, or 50 wt. % to 97 wt. % of the HDPE polymer and 0.01 wt. % to 10 wt. %, or 0.01 wt. % to 5 wt. % of the metallocene polyethylene wax, based on total weight of the HDPE resin composition. In some aspects, the HDPE polymer can have a melt flow index (MFI) of 15 to 60 g/10 min at 190 °C and 2.16 kg as measured by ISO 1133. In some aspects, the HDPE polymer can have a MFI of 15 to 45 g/10 min, or 25 to 35 g/10 min at 190 °C and 2.16 kg as measured by ISO 1133. The HDPE polymer has a density of 0.925 g/cm³ to 0.975 g/cm³, or 0.930 g/cm³ to 0.970 g/cm³ as measured by ASTM D 1505. In some aspects, the metallocene polyethylene wax can have a drop point of 115 °C to 145 °C as measured by ASTM 3954, a viscosity of 40 mPa.s to 500 mPa.s at 140 °C as measured by DIN 53019 at 140 °C, and/or a density of 0.95 g/cm³ to 1.00 g/cm³ as measured by ISO 1183. In some aspects, the metallocene polyethylene wax can have a drop point of 120 °C to 140 °C, or 120 °C to 135 °C, or 125 °C to 130 °C as measured by ASTM 3954. In some aspects, the metallocene polyethylene wax can have a density of 0.96 g/cm³ to 0.99 g/cm³, or 0.965 g/cm³ to 0.98 g/cm³, or about 0.97 g/cm³ , at about 23 °C as measured by ISO 1183. In some aspects, the metallocene polyethylene wax can have a viscosity of 40 mPa.s to 400 mPa.s, or 40 mPa.s to 300 mPa.s, or 40 mPa.s to 200 mPa.s, or 40 mPa.s to 100 mPa.s, or 40 mPa.s to 80 mPa.s at 140 °C as measured by DIN 53019. In some aspects, the HDPE resin composition can include 0.5 wt. % to 25 wt. % of a low density polyethylene (LDPE) polymer based on total weight of the HDPE resin composition. In some aspects, the HDPE resin composition can include 50 wt. % to 99 wt. % of the HDPE polymer, 0.01 wt. % to 5 wt. % of the metallocene polyethylene wax and 0.5 wt. % to 25 wt. % of the LDPE polymer based on total weight of the HDPE resin composition. In some particular aspects, the LDPE polymer has a density of 0.913 g/cm³ to 1.19 g/cm³ as measured by ASTM D 1505, and can have preferably one of the following features 1) a melting point of 100 °C to 140 °C, as measured by DIN 53765, 2) a MFI of 50 g/10 min to 100 g/10 min at 190 °C and 2.16 kg as measured by ISO 1133, and/or 3) a Vicat softening temperature of 68 °C to 89 °C at 10N and 50 °C/h as measured by A50, ISO306. In some particular aspects, the LDPE polymer can have a density of 0.913 g/cm³ to 0.94 g/cm³, or 0.915 g/cm³ to 0.925 g/cm³, or 0.918 g/cm³ to 0.92 g/cm³, or about 0.919 g/cm³ as measured by ASTM D 1505. In some particular aspects, the LDPE polymer can have a melting point of 100 °C to 130 °C, or 100 °C to 120 °C, or 100 °C to 110 °C, or 102 °C to 106 °C or about 104 °C, as measured by DIN 53765. In some particular aspects, the LDPE polymer can have a MFI of 55 g/10 min to 90 g/10 min, or 60 g/10 min to 80 g/10 min, or 60 g/10 min to 70 g/10 min, or 62 g/10 min to 68 g/10 min, or about 65 g/10 min at 190 °C and 2.16 kg as measured by ISO 1133. In some particular aspects, the LDPE polymer can have a Vicat softening temperature of 72 °C to 80 °C or about 75 °C at 10N and 50 °C/h as measured by A50, ISO306. In some particular aspects, the LDPE polymer can be a branched LDPE polymer. In some particular aspects, the LDPE polymer can be a highly branched LDPE polymer. In some aspects, the HDPE resin composition can include 0.5 wt. % to 35 wt. % of an ethylene-vinyl acetate (EVA) polymer based on total weight of the HDPE resin composition. In some aspects, the HDPE resin composition can include 50 wt. % to 99 wt. % of the HDPE polymer, 0.01 wt. % to 5 wt. % of the metallocene polyethylene wax and 0.5 wt. % to 35 wt. % of the EVA polymer based on total weight of the HDPE resin composition. In some aspects, the HDPE resin composition can include 50 wt. % to 98.5 wt. % of the HDPE polymer, 0.01 wt. % to 5 wt. % of the metallocene polyethylene wax, 0.5 wt. % to 25 wt. % of the LDPE polymer and 0.5 wt. % to 35 wt. % of the EVA polymer based on total weight of the HDPE resin composition. In some aspects, the EVA polymer can have a MFI of 150 g/10 min to 800 g/10 min, or 200 g/10 min to 500 g/10 min, or 250 g/10 min to 450 g/10 min, or 300 g/10 min to 400 g/10 min at 190 °C and 2.16 kg as measured by ISO 1133. In some aspects, the HDPE resin composition can include 0.5 wt. % to 30 wt. %, or 0.5 wt. % to 25 wt. % of a linear low density polyethylene (LLDPE) polymer based on total weight of the HDPE resin composition. In some aspects, the HDPE resin composition can include 50 wt. % to 99 wt. % of the HDPE polymer, 0.01 wt. % to 5 wt. % of the metallocene polyethylene wax and 0.5 wt. % to 25 wt. %, or 0.5 wt. % to 30 wt. % of the LLDPE polymer based on total weight of the HDPE resin composition. In some aspects, the LLDPE polymer has a density of 0.870 g/cm³ to 0.963 g/cm³ as measured by ASTM D 1505, and can have preferably one of the following features 1) a MFI of 40 g/10 min to 800 g/10 min, or 40 g/10 min to 100 g/10 min at 190 °C and 2.16 kg as measured by ISO 1133 and/or 2) a Vicat softening temperature of 41 °C to 130 °C at 10 N and 50 °C/h as measured by A50, ASTMD1525. In some aspects, the LLDPE polymer can have a density of 0.880 g/cm³ to 0.95 g/cm³, or 0.9 g/cm³ to 0.94 g/cm³, or 0.910 g/cm³ to 0.930 g/cm³ or 0.920 g/cm³ to 0.930 g/cm³ or about 0.926 g/cm³ as measured by ASTM D 1505. In some aspects, the LLDPE polymer can have a MFI of 50 g/10 min to 100 g/10 min, 50 g/10 min to 90 g/10 min, or 50 g/10 min to 80 g/10 min, 50 g/10 min to 70 g/10 min, or 50 g/10 min to 60 g/10 min, or about 50 g/10 min at 190 °C and 2.16 kg as measured by ISO 1133. In some aspects, the LLDPE polymer can have a Vicat softening temperature of 50 °C to 110 °C, or 60 °C to 100 °C, or 70 °C to 95 °C, or 80 °C to 90 °C, or about 88 °C at 10 N and 50 °C/h as measured by A50, ASTMD1525. In some aspects, the LLDPE polymer can be an ethylene-alpha olefin polymer, such as ethylene-alpha butene polymer, ethylene-alpha hexene polymer, or an ethylene-alpha octene polymer, or any combination thereof. In some aspects, the LLDPE polymer can be an ethylene-alpha hexene polymer. In some aspects, the HDPE resin composition can include an ethylene-alpha olefin polymer. In some aspects, the HDPE resin composition can include 0.5 wt. % to 30 wt. % of an ethylene-alpha olefin polymer based on total weight of the HDPE resin composition. In some aspects, the ethylene-alpha olefin polymer can be an ethylene-alpha butene polymer, an ethylene-alpha hexene polymer, or an ethylene-alpha octene polymer, or any combination thereof. In some particular aspects, the total wt.% of the ethylene-alpha butene polymer, an ethylene-alpha hexene polymer, and the ethylene-alpha octene polymer in the HDPE resin composition can be 0.5 wt. % to 30 wt. % based on total weight of the HDPE resin composition. In some aspects, the HDPE resin composition can include 50 wt. % to 99 wt. % of the HDPE polymer, 0.01 wt. % to 5 wt. % of the metallocene polyethylene wax and 0.5 wt. % to 30 wt. % of the ethylene-alpha olefin polymer based on total weight of the HDPE resin composition. In some aspects, the HDPE resin composition can include 0.01 wt. % to 5 wt. % of a hydrogenated paraffin oil and 0.01 wt. % to 30 wt. % of a styrenic block copolymer based on total weight of the HDPE resin composition. In some aspects, the HDPE resin composition can include 50 wt. % to 99 wt. % of the HDPE polymer, 0.01 wt. % to 5 wt. % of the metallocene polyethylene wax, 0.01 wt. % to 5 wt. % of the hydrogenated paraffin oil and 0.01 wt. % to 30 wt. % of the styrenic block copolymer based on total weight of the HDPE resin composition. In some particular aspects, the hydrogenated paraffin oil can have a density of 0.848 g/cm³ to 0.866 g/cm³ and/or a kinematic viscosity of 15 mm²/s to 70 mm²/s at 40 °C and 3.5 mm²/s to 10 mm²/s at 100 °C. In some aspects, the styrenic block copolymer can be a styrene-butadiene-styrene (SBS) block copolymer, a styrene-isoprene-styrene (SIS) block copolymer, a styrene-ethylene/propylene (SEP) block copolymer, a styrene-ethylene/propylene-styrene (SEPS) block copolymer, a styrene-ethylene/butylene (SEB) block copolymer, a styrene-ethylene/butylene-styrene (SEBS) block copolymer, a styrene-[ethylene-(ethylene-propylene)]-styrene (SEEPS) block copolymer, or any combination thereof. In some aspects, the styrenic block copolymer can be a SBS block copolymer, a SEBS block copolymer, SEPS block copolymer or any combination thereof. In some aspects, the HDPE resin composition can include 0.01 wt. % to 5 wt. % of an internal lubricant based on total weight of the HDPE resin composition. In some aspects, the HDPE resin composition can include 50 wt. % to 99 wt. % of the HDPE polymer, 0.01 wt. % to 5 wt. % of the metallocene polyethylene wax, and 0.01 wt. % to 5 wt. % of the internal lubricant based on total weight of the HDPE resin composition. In some particular aspects, the internal lubricant can be a metal stearate, erucamide, oleamide, ethylene bis-stearamide, glycolmonostearate, or any combination thereof. In some particular aspects, the metal stearate can be a zinc stearate. In some aspects, the internal lubricant can be erucamide. In some aspects, the HDPE resin composition can include 0.01 wt. % to 5 wt. % of a fluoropolymer based on total weight of the HDPE resin composition. In some aspects, the HDPE resin composition can include 50 wt. % to 99 wt. % of the HDPE polymer, 0.01 wt. % to 5 wt. % of the metallocene polyethylene wax, and 0.01 wt. % to 5 wt. % of the fluoropolymer based on total weight of the HDPE resin composition. In some aspects, the fluoropolymer can be polytetrafluoroethylene. In some aspects, the fluoropolymer can have a density of 1.85 g/ cm³ to 2.00 g/ cm³, a melting point of 100 °C to 135 °C, and/or a MFI 5 g/10 min to 40 g/10 min at 265 °C and 5 kg. In some aspects, the fluoropolymer can have a density of 1.9 g/ cm³ to 1.96 g/ cm³. In some aspects, the fluoropolymer can have a melting point of 110 °C to 126 °C. In some aspects, the fluoropolymer can have a MFI 5 to 25 g/10 min at 265 °C and 5 kg. In some aspects, the HDPE resin composition comprises 0.01 wt. % to 5 wt. % of a high molecular weight polysiloxane mixed with an amorphous silica based on total weight of the HDPE resin composition. In some aspects, the HDPE resin composition can include 50 wt. % to 99 wt. % of the HDPE polymer, 0.01 wt. % to 5 wt. % of the metallocene polyethylene wax, and 0.01 wt. % to 5 wt. % of the high molecular weight polysiloxane mixed with an amorphous silica based on total weight of the HDPE resin composition. In some particular aspects, the high molecular weight polysiloxane mixed with an amorphous silica has a density of 0.965 g/ cm³ to 1.25 g/ cm³, or 0.965 g/ cm³ to 1.15 g/ cm³ or about 1.15 g/ cm³ at 25 °C. In some aspects, the HDPE resin composition can include 0.01 wt. % to 5 wt. % or 0.01 wt. % to 0.05 wt. % of a quaterrylenetetracarboxylic diimide based on total weight of the HDPE resin composition. In some aspects, the HDPE resin composition can include 50 wt. % to 99 wt. % of the HDPE polymer, 0.01 wt. % to 5 wt. % of the metallocene polyethylene wax, and 0.01 wt. % to 5 wt. %, or 0.01 wt. % to 0.05 wt. % of the quaterrylenetetracarboxylic diimide based on total weight of the HDPE resin composition. In some aspects, the quaterrylenetetracarboxylic diimide can be a near IR (NIR) absorber. In some aspects, the HDPE resin composition can include 1 wt. % to 20 wt. %, or 1 wt. % to 10 wt. %, or 2 wt. % to 5 wt. %, of a maleic anhydride grafted polyethylene based on total weight of the HDPE resin composition. In some aspects, the HDPE resin composition can include 50 wt. % to 98.5 wt. %, or 50 wt. % to 97 wt. % of the HDPE polymer, 0.01 wt. % to 20 wt. %, or 0.01 wt. % to 5 wt. % of the metallocene polyethylene wax, and 1 wt. % to 20 wt. %, or 1 wt. % to 10 wt. %, or 2 wt. % to 5 wt. % of the maleic anhydride grafted polyethylene based on total weight of the HDPE resin composition. In some aspects, maleic anhydride content in the maleic anhydride grafted polyethylene can be 1 wt. % to 5 wt. %, or 2.5 wt. % to 4 wt. %. In some aspects, the maleic anhydride grafted polyethylene can contain 0.1 wt. % to 5 wt. % of a grafted high density polyethylene with relative high MFI. In some aspects, the HDPE resin composition can contain a maleic anhydride grafted metallocene wax. In some aspects, the maleic anhydride grafted metallocene wax can be formed by combining maleic anhydride grafted high density polyethylene with metallocene wax. In some aspects, the HDPE resin composition can include 50 wt. % to 98.5 wt. % of the HDPE polymer, 0.01 wt. % to 20 wt. % of the metallocene polyethylene wax, and 1 wt. % to 20 wt. % of the maleic anhydride grafted metallocene wax based on total weight of the HDPE resin composition.

In some aspects, the HDPE resin composition can have a MFI of 9 to 90 g/10 min at 190 °C and 2.16 kg as measured by ISO 1133, a drawing ratio of 1.8 to 4.5, and/or a crystallinity temperature of 100 °C to 140 °C. In some aspects, the HDPE resin composition can have a MFI of 40 g/10 min to 90 g/10 min, or 50 g/10 min to 90 g/10 min, or 60 g/10 min to 90 g/10 min, or 70 g/10 min to 90 g/10 min, or 80 g/10 min to 90 g/10 min, or 85 g/10 min to 90 g/10 min at 190 °C and 2.16 kg as measured by ISO 1133. In some aspects, the HDPE resin composition can have a crystallinity temperature of 110 °C to 136 °C, or 122 °C to 133 °C. Crystallinity temperature can be obtained by DSC measurements performed using a DSC TA Q20 (TA Instruments, USA) and an intracooler or chiller capable of reaching -90 °C. The measurements can be performed under inert atmosphere (e.g., nitrogen gas flow) to avoid degradation. DSC methodology can include heating the sample to 25 °C to 220 °C at a rate of 10 °C/min, holding for 1 to 4 (about 3) min at the final temperature, cooling the sample from 220 °C to 25 °C at a rate of 10 °C/min, and then heating the sample against from 25 °C to 220 °C at the same rate. Measurements can be cycled twice to ensure that the sample does not change during the measurement. In some aspects, the crystallinity temperature can be peak crystallization temperature as measured using the DSC procedure according to ASTM ISO11357-1, 2, and/or 3. In some aspects, the fiber material can be a continuous fiber material. In some particular aspects, the continuous fiber material can be a continuous glass, carbon, ceramic, aramid, basalt or polymeric fiber material, or any combination thereof.

In some aspects, the fiber composite can be a UD tape. In some aspects, the UD tape can have a thickness 0.1 mm to 0.5 mm. In some aspects, the UD tape can have a thickness 0.1 mm to 0.3 mm. In some aspects, the UD tape can have thickness greater than 0.3 mm to 0.5 mm. In some aspects, the UD tape can have a mean relative fiber area coverages (%) ("RFAC") of 65 to 90. In some aspects, the UD tape can have a coefficients of variance (%) ("COV") of 3 to 20.

In one aspect of the present invention, a method for making a fiber composite of the current invention is described. In some particular aspects, the fiber composite can be an UD tape. In some aspects, the fiber composite can be made by a melt impregnation process. In some aspects, the melt impregnation process can include, impregnating the HDPE resin composition with the fiber material. In some particular aspects, the melt impregnation process can include casting molten HDPE resin composition as a film on a moving bed of continuous fibers. In some aspects, the moving bed of continuous fibers can be moved at a line speed of 10 m/min to 15 m/min. In some particular aspects, the melt impregnation process can include, spreading a first set of one or more bundles of the fiber material into a first spread fiber layer, spreading a second set of one or more bundles of the fiber material into a second spread fiber layer, casting the molten HDPE resin composition into the second spread fiber layer, and pressing together the first and second spread fiber layers. The molten HDPE resin composition can be casted into the second spread fiber layer by moving the second spread fiber layer in a first direction underneath and relative to an outlet of a die of an extruder while the molten HDPE resin composition is extruded as a film through the outlet in an extrusion direction that is perpendicular to or has a component that is counter to the first direction. In some aspects, the second spread layer can be moved at a line speed of 10 m/min to 15 m/min in the first direction. In some aspects, the second spread fiber layer can have at least 10% more fibers than the first spread fiber layer. In some aspects, the first spread fiber layer and/or the second spread fiber layer can contain continuous fibers. In some methods, the second spread fiber layer contacts or comes in close proximity to (e.g., within 5 mm of) the die. In some aspects, the second spread fiber layer is passed underneath a scraper, which may be part of the die, the scraper can have a downstream portion and an upstream portion, where a distance between the second spread fiber layer and the upstream portion is larger than a corresponding (i.e., measured in the same direction) distance between the second spread fiber layer and the downstream portion such that the molten HDPE resin composition accumulates between the scraper and the second spread fiber layer. In some aspects, the molten HDPE resin composition from the die can be pushed into the second spread fiber layer, thereby facilitating impregnation of the second spread fiber layer.

The following includes definitions of various terms and phrases used throughout this specification.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%. The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

The terms "wt.%", "vol.%", or "mol. %" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The term "coupled" is defined as connected, although not necessarily directly, and not necessarily mechanically; two items that are "coupled" may be unitary with each other.

Further, a device or system that is configured in a certain way is configured in at least that way, but it can also be configured in other ways than those specifically described.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The term "drawing ratio" as described herein, is a value obtained by dividing the die gap thickness by the average thickness of the final solidified film.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "effective amount" refers to an amount of a compound where addition of such amount produces a desired or intended effect.

Other objects, features and advantages of the present invention will become apparent from the following detailed description and examples. It should be understood, however, that the detailed description and examples, while indicating specific embodiments of the invention, are given by way of illustration only and are not meant to be limiting. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Each of the figures, unless identified as a schematic view, is drawn to scale, meaning the sizes of the elements depicted in the figure are accurate relative to each other for at least the embodiment depicted in the figure.

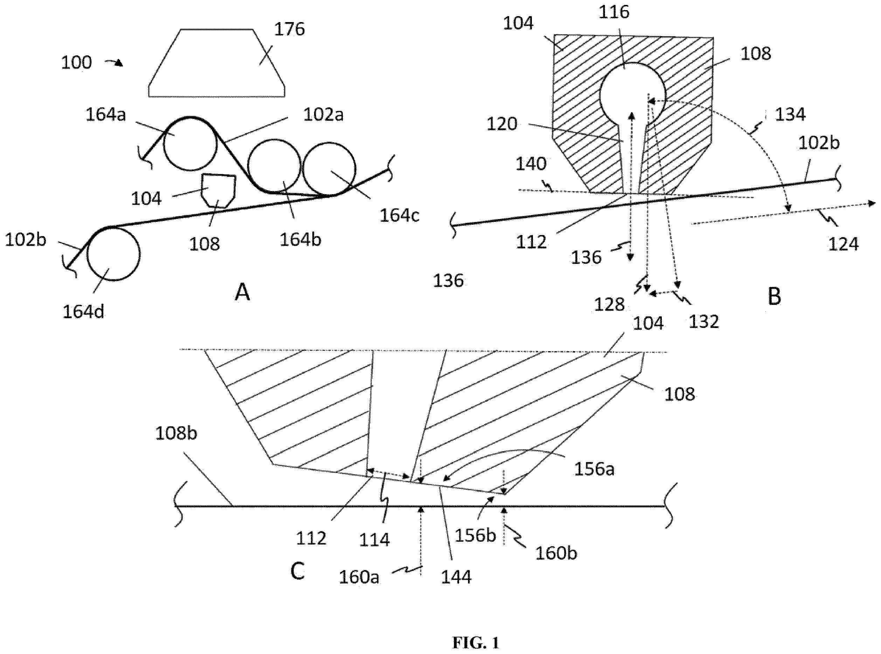

FIG. 1. A melt impregnation system and a process for preparing a fiber composite according to an example of the current invention.

### DETAILED DESCRIPTION

A discovery has been made that provides a solution to at least some of the aforementioned problems. It has been discovered fiber composites containing greater than 60 wt.% of a fiber material and a HDPE resin composition containing a HDPE polymer and a polyethylene wax shows relatively uniform densities, low dry spot, correct position and amount of the matrix material.

### A. HDPE Resin Composition

The HDPE resin composition of the current invention can have relatively low viscosity and high melt strength. The HDPE resin composition of the current invention can have (1) a MFI of 9 g/10 min to 90 g/10 min, or at least any one of, equal to any one of, or between any two of 9 g/10 min, 10 g/10 min, 20 g/10 min, 30 g/10 min, 40 g/10 min, 50 g/10 min, 60 g/10 min, 70 g/10 min, 80 g/10 min, 85 g/10 min and 90 g/10 min at 190 °C and 2.16 kg as measured by ISO 1133, (2) a drawing ratio 1.8 to 4.5, or at least any one of, equal to any one of, or between any two of 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, and 4.5, and/or (3) a crystallinity temperature of 100 °C to 140 °C, or at least any one of, equal to any one of, or between any two of 100 °C, 110 °C, 120 °C, 122 °C, 123 °C, 124 °C, 125 °C, 126 °C, 127 °C, 128 °C, 129 °C, 130 °C, 131 °C, 132 °C, 133 °C, 135 °C, 136 °C, and 140 °C, or any combination thereof.

The HDPE resin composition includes a HDPE polymer and a metallocene polyethylene wax. The HDPE resin composition includes 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, 96 wt. %, 97 wt. %, 98 wt. %, 98.5 wt. %, and 99 wt. % of the HDPE polymer and 0.01 wt. % to 10 wt. % or at least any one of, equal to any one of, or between any two of 0.01 wt. %, 0.1 wt. %, 0.5 wt. %, 1 wt. %, 1.5 wt. %, 2 wt. %, 2.5 wt. %, 3 wt. %, 3.5 wt. %, 4 wt. %, 4.5 wt. %, 5 wt. %, 6 wt. %, 7 wt. %, 8 wt. %, 9 wt. %, 10 wt. % of the polyethylene wax, based on total weight of the HDPE resin composition. The metallocene polyethylene wax can be added to the HDPE polymer by a suitable means known in the art. In some aspects, the polyethylene wax in a powder of granulate form can be added with the HDPE polymer to obtain the HDPE resin composition. In some aspects, the polyethylene wax can be a microcrystalline polyethylene wax., The polyethylene wax is a metallocene polyethylene wax. Without intending to be limited by theory, it is believed that addition of an effective amount of a polyethylene wax with a HDPE polymer, may result in a composition with viscosity lower than the HDPE polymer. Since melt strength of a metallocene polyethylene wax is higher than conventional polyethylene waxes, addition of an effective amount of a metallocene polyethylene wax may decrease viscosity of the HDPE polymer without any or substantial decrease of melt strength, and thus may not substantially influence tensile strength, impact strength, sensibility for environmental stress cracking and sealability of the HDPE polymer. In addition, metallocene polyethylene wax can contain less amount low or very low molecular weight components compared to conventional polyethylene waxes. Low or very low molecular weight part of wax can plate out in the final application of the tape.

In some aspects, the HDPE polymer can have (1) a MFI of 15 g/10 min to 60 g/10 min, or at least any one of, equal to any one of, or between any two of 15 g/10 min, 20 g/10 min, 25 g/10 min, 26 g/10 min, 27 g/10 min, 28 g/10 min, 29 g/10 min, 30 g/10 min, 31 g/10 min, 32 g/10 min, 33 g/10 min, 34 g/10 min, 35 g/10 min, 40 g/10 min, 45 g/10 min, 50 g/10 min, 55 g/10 min, and 60 g/10 min at 190 °C and 2.16 kg as measured by ISO 1133. It has a density of 0.925 g/cm³ to 0.975 g/cm³, or at least any one of, equal to any one of, or between any two of 0.925 g/cm³, 0.930 g/cm³, 0.935 g/cm³, 0.940 g/cm³, 0.945 g/cm³, 0.950 g/cm³, 0.955 g/cm³, 0.960 g/cm³, 0.965 g/cm³, 0.970 g/cm³, 0.975 g/cm³, as measured by ASTM D 1505. In some aspects, the weight average molecular weight of the HDPE polymer can be 42000 Daltons to 60000 Daltons or at least any one of, equal to any one of, or between any two of 42000 Daltons, 44000 Daltons, 46000 Daltons, 48000 Daltons, 50000 Daltons, 52000 Daltons, 54000 Daltons, 56000 Daltons, 58000 Daltons, and 60000 Daltons. HDPE polymers that are useful in the current invention includes but are not limited to HDPE polymers those are commercially available under the brand name SABIC^{®} HDPE CC3054 sold by SABIC, SABIC^{®} HDPE F0863 sold by SABIC, SABIC^{®} HDPE A4046 sold by SABIC, SABIC^{®} HDPE PCG300054 sold by SABIC, BAPOLENE^{®} GRADE HD3292 sold by Bamberger Polymers, DOW HDPE DMDA-8007 NT 7 sold by Dow, DOW HDPE DMDA-8940 NT 7 sold by Dow, SCLAIR^{®} 2815 sold by Nova chemicals, and/or SCLAIR^{®} 2714 sold by Nova chemicals.

In some aspects, the HDPE polymer can contain two or more HDPE polymers with different molecular weight ranges. In some aspects, the HDPE polymer can be a contain a low MFI HDPE polymer and a high MFI HDPE polymer. In some aspects, the low MFI HDPE polymer can have MFI of 5 g/10 min to less than 25 g/10 min at 190 °C and 2.16 kg as measured by ISO 1133. In some aspects, the high MFI HDPE polymer can have MFI of 25 g/10 min to 60 g/10 min at 190 °C and 2.16 kg as measured by ISO 1133. In some aspects, the HDPE polymer can contain 5 wt. % to 35 wt. % of the low MFI HDPE polymer and 65 wt. % to 95 wt. % of the high MFI HDPE polymer.

In some aspects, the metallocene polyethylene wax can have (1) a drop point of 115 °C to 145 °C, or at least any one of, equal to any one of, or between any two of 115 °C, 120 °C, 125 °C, 126 °C, 127 °C, 128 °C, 129 °C, 130 °C, 135 °C, 140 °C, and 145 °C, as measured by ASTM D 3954, (2) a viscosity of 40 mPa.s to 500 mPa.s or at least any one of, equal to any one of, or between any two of 40 mPa.s, 45 mPa.s, 50 mPa.s, 55 mPa.s, 60 mPa.s, 65 mPa.s, 70 mPa.s, 75 mPa.s, 80 mPa.s, 90 mPa.s, 100 mPa.s, 150 mPa.s, 200 mPa.s, 250 mPa.s, 300 mPa.s, 350 mPa.s, 400 mPa.s, 450 mPa.s, and 500 mPa.s, at 140 °C as measured by DIN 53019, and/or (3) a density of 0.95 g/cm³ to 1.00 g/cm³, or at least any one of, equal to any one of, or between any two of 0.950 g/cm³, 0.955 g/cm³, 0.960 g/cm³, 0.965 g/cm³, 0.970 g/cm³, 0.975 g/cm³, 0.980 g/cm³, 0.985 g/cm³, 0.990 g/cm³, 0.995 g/cm³, and 1.00 g/cm³, at 23 °C as measured by ISO 1183. In some aspect, the metallocene wax can be maleic anhydride modified metallocene wax. Metallocene polyethylene waxes that are useful in the current invention includes but are not limited to Metallocene polyethylene waxes those are commercially available under the brand name LICOCENE^{®} PE 4201, sold by Clariant, LICOCENE^{®} PE 5301, sold by Clariant, and/or EXCEREX^{™} 40800T, sold by Mitsui Chemicals.

In some aspects, the HDPE resin composition can include a LDPE polymer. In some aspects, the HDPE resin composition can include 0.5 wt. % to 25 wt. % or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. % and 25 wt. %, of the LDPE polymer, based on total weight of the HDPE resin composition. In some aspects, the HDPE resin composition can include the HDPE polymer, the metallocene polyethylene wax and the LDPE polymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.5 wt. % to 25 wt. % or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. % and 25 wt. %, of the LDPE polymer based on total weight of the HDPE resin composition. In some particular aspects, the LDPE polymer can have (1) a density of 0.913 g/cm³ to 1.19 g/cm³, or at least any one of, equal to any one of, or between any two of 0.913 g/cm³, 0.915 g/cm³, 0.917 g/cm³, 0.918 g/cm³, 0.919 g/cm³, 0.92 g/cm³, 0.925 g/cm³, 0.93 g/cm³, 0.935 g/cm³, 0.94 g/cm³, 0.95 g/cm³, 0.96 g/cm³, 0.97 g/cm³, 0.98 g/cm³, 0.99 g/cm³, 1.00 g/cm³, 1.10 g/cm³ and 1.19 g/cm³, as measured by ASTM D 1505, (2) a melting point of 100 °C to 140 °C, or at least any one of, equal to any one of, or between any two of 100 °C, 101 °C, 102 °C, 103 °C, 104 °C, 105 °C, 106 °C, 107 °C, 108 °C, 109 °C, 110 °C, 115 °C,120 °C, 125 °C, 130 °C, 135 °C, 140 °C, 145 °C, and 150 °C, as measured by DIN 53765 (3) a MFI of 50 g/10 min to 100 g/10 min, or at least any one of, equal to any one of, or between any two of 50 g/10 min, 55 g/10 min, 60 g/10 min, 65 g/10 min, 70 g/10 min, 75 g/10 min, 80 g/10 min, 85 g/10 min, 90 g/10 min, 95 g/10 min, and 100 g/10 min at 190 °C and 2.16 kg as measured by ISO 1133, and/or (4) a Vicat softening temperature of 68 °C to 89 °C, or at least any one of, equal to any one of, or between any two of 68 °C, 69 °C, 71 °C, 72 °C, 73 °C, 74 °C, 75 °C, 76 °C, 77 °C, 78 °C, 79 °C, 80 °C, 81 °C, 82 °C, 83 °C, 84 °C, 85 °C, 86 °C, 87 °C, 88 °C, and 89 °C at 10N and 50 °C/h as measured by A50, ISO306. The LDPE polymer can be a branched polymer. In some particular aspects, the LDPE polymer can be a highly branched LDPE polymer. Without intending to be limited by theory, it is believed that addition of an effective amount of a LDPE polymer with a HDPE polymer, may result in a composition with viscosity lower than the HDPE polymer. Addition of an effective amount of a branched and/or highly branched LDPE polymer with a HDPE polymer, may result in a composition with viscosity lower and melt strength higher than the HDPE polymer. The LDPE polymer can be added to the HDPE polymer and the metallocene polyethylene wax by a suitable means known in the art. In some aspects, the LDPE polymer can be added with the HDPE polymer and the metallocene polyethylene wax by dry blending in pelletized form followed by melt blending in a extruder or a mixer. LDPE polymer that are useful in the current invention includes but are not limited to LDPE polymers those are commercially available under the brand name SABIC^{®} LDPE 1965N0 sold by SABIC, RIBLENE MV 10 R, and/or RIBLENE MT 10 R.

In some aspects, the HDPE resin composition can include an ethylene-vinyl acetate (EVA) polymer. In some aspects, the HDPE resin composition can include 0.5 wt. % to 35 wt. %, or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, 30 wt. %, 31 wt. %, 32 wt. %, 33 wt. %, 34 wt. % and 35 wt. %, of the EVA polymer based on total weight of the HDPE resin composition. In some aspects, the HDPE resin composition can include the HDPE polymer, the metallocene polyethylene wax and the EVA polymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.5 wt. % to 35 wt. %, or at least any one of, equal to any one of or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, 30 wt. %, 31 wt. %, 32 wt. %, 33 wt. %, 34 wt. % and 35 wt. %, of the EVA polymer based on total weight of the HDPE resin composition. In some aspects, the HDPE resin composition can include the HDPE polymer, the metallocene polyethylene wax, the LDPE polymer and the EVA polymer. In some aspects, the HDPE resin composition can include 50 wt. % to 98.5 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 98.5 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, 0.5 wt. % to 25 wt. % or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. % and 25 wt. %, of the LDPE polymer, and 0.5 wt. % to 35 wt. %, or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, 30 wt. %, 31 wt. %, 32 wt. %, 33 wt. %, 34 wt. % and 35 wt. %, of the EVA polymer based on total weight of the HDPE resin composition. In some aspects, the EVA polymer can have a MFI of 150 g/10 min to 800 g/10 min, or at least any one of, equal to any one of, or between any two of 150 g/10 min, 200 g/10 min, 250 g/10 min, 300 g/10 min, 320 g/10 min, 340 g/10 min, 360 g/10 min, 380 g/10 min, 400 g/10 min, 450 g/10 min, 500 g/10 min, 650 g/10 min and 800 g/10 min at 190 °C and 2.16 kg as measured by ISO 1133. Without intended to be limited by the theory it is believed that addition of an effective amount of an EVA polymer with a HDPE polymer, may result in a composition with lower crystallinity than the HDPE polymer. Since crystallization process can reduce the wettability of the continuous fibers, polymer compositions with lower crystallinity during melt impregnation process might be advantageous. EVA polymer that are useful in the current invention includes but are not limited to EVA polymers those are commercially available under the brand name DUPONT ELVAX 4310 sold by Dupont, DUPONT ELVAX 4320 sold by Dupont, DUPONT ELVAX 22 sold by Dupont, ARKEMA EVATANE 28-150 sold by Arkema, ARKEMA EVATANE 28-420 sold by Arkema, and/or ARKEMA EVATANE 28-800 sold by Arkema.

In some aspects, the HDPE resin composition can include a LLDPE polymer. In some aspects, the HDPE resin composition can include 0.5 wt. % to 25 wt. % or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. % and 25 wt. %, of the LLDPE polymer based on total weight of the HDPE resin composition. In some aspects, the HDPE resin composition can include the HDPE polymer, the metallocene polyethylene wax and the LLDPE polymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.5 wt. % to 25 wt. % or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. % and 25 wt. %, of the LLDPE polymer based on total weight of the HDPE resin composition. In some particular aspects, the LLDPE polymer can have (1) a density of 0.87 g/cm³ to 0.963 g/cm³, or at least any one of, equal to any one of, or between any two of 0.87 g/cm³, 0.88 g/cm³, 0.89 g/cm³, 0.90 g/cm³, 0.91 g/cm³, 0.915 g/cm³, 0.920 g/cm³, 0.925 g/cm³, 0.926 g/cm³, 0.93 g/cm³, 0.935 g/cm³, 0.94 g/cm³, 0.945 g/cm³, 0.95 g/cm³, 0.96 g/cm³, and 0.963 g/cm³ as measured by ASTM D1505, (2) a MFI of 40 g/10 min to 800 g/10 min, or at least any one of, equal to any one of, or between any two of 40 g/10 min, 45 g/10 min, 50 g/10 min, 55 g/10 min, 60 g/10 min, 65 g/10 min, 70 g/10 min, 75 g/10 min, 80 g/10 min, 85 g/10 min, 90 g/10 min, 95 g/10 min, 100 g/10 min, 200 g/10 min, 400 g/10 min, 600 g/10 min, and 800 g/10 min, at 190 °C and 2.16 kg as measured by ISO 1133, and/or (3) a Vicat softening temperature of 41 °C to 130 °C, or at least any one of, equal to any one of, or between any two of 50 °C, 60 °C, 70 °C, 80 °C, 82 °C, 84 °C, 86 °C, 88 °C, 90 °C, 92 °C, 94 °C, 96 °C, 98 °C, 100°C, 110 °C, 120 °C and 130 °C at 10 N and 50 °C/h as measured by A50, ISO306. In some aspects, the LLDPE polymer can be a hexene linear low-density polyethylene polymer. LLDPE polymer that are useful in the current invention includes but are not limited to LLDPE polymers those are commercially available under the brand name SABIC LLDPE 1965MO sold by Sabic, PETROTHENE GA594189 sold by LyondellBasell, MICROTHENE MP574189 sold by LyondellBasell, EXXONMOBIL^{™} LLDPE LL 6201.19 sold by Exxonmobil, DOW - AFFINITY GA1875POE sold by Dow, DOW - AFFINITY GA1950POE sold by Dow, and/or DOW - AFFINITY GA100RPOE sold by Dow.

In some aspects, the HDPE resin composition can include an ethylene-alpha olefin polymer. In some aspects, the HDPE resin composition can include 0.5 wt. % to 30 wt. %, or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, and 30 wt. %, of the ethylene-alpha olefin polymer based on total weight of the HDPE resin composition. In some aspects, the HDPE resin composition can include the HDPE polymer, the metallocene polyethylene wax and the ethylene-alpha olefin polymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.5 wt. % to 30 wt. %, or at least any one of, equal to any one of, or between any two of 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, and 30 wt. %, of an ethylene-alpha olefin polymer based on total weight of the HDPE resin composition. In some aspects, the ethylene-alpha olefin polymer can be an ethylene-alpha butene polymer, an ethylene-alpha hexene polymer, or an ethylene-alpha octene polymer, or any combination thereof. Without intending to be limited by theory, it is believed that addition of an effective amount of an ethylene-alpha butene polymer, an ethylene-alpha hexene polymer and/or an ethylene-alpha octene polymer with a HDPE polymer, may reduce some of the problems associated with relatively fast crystallization and sharp melting point of some HDPE polymers. Relatively fast crystallization and sharp melting point of a HDPE polymer may result in a relatively small processing window with respect to sealability for a fiber composite, such as UD tape, made by melt impregnation of the HDPE polymer with a fiber material. Addition of an effective amount of an alpha butene polymer, an ethylene-alpha hexene polymer and/or the ethylene-alpha octene polymer with the HDPE polymer may increase the sealing window for a fiber composite made by melt impregnation of the resulting composition with a fiber material. Ethylene-alpha olefin polymer that are useful in the current invention includes but are not limited to ethylene-alpha olefin polymers those are commercially available under the brand name EXXONMOBILE - EXACT 0230 sold by Exxonmobile, and/or TAFMER A20085S sold by Mitsui chemicals.

In some aspects, the HDPE resin composition can include a hydrogenated paraffin oil and a styrenic block copolymer. In some aspects, the HDPE resin composition can include 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the hydrogenated paraffin oil and 0.01 wt. % to 30 wt. %, or at least any one of, equal to any one of, or between any two of 0.01 wt. %, 0.1 wt. %, 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, and 30 wt. %, of the styrenic block copolymer based on total weight of the HDPE resin composition. In some aspects, the HDPE resin composition can include the HDPE polymer, the metallocene polyethylene wax, the hydrogenated paraffin oil and the styrenic block copolymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the hydrogenated paraffin oil and 0.01 wt. % to 30 wt. %, or at least any one of, equal to any one of, or between any two of 0.01 wt. %, 0.1 wt. %, 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, 25 wt. %, 26 wt. %, 27 wt. %, 28 wt. %, 29 wt. %, and 30 wt. %, of the styrenic block copolymer based on total weight of the HDPE resin composition. In some particular aspects, the hydrogenated paraffin oil can have (1) a density of 0.848 g/cm³ to 0.866 g/cm³, or at least any one of, equal to any one of, or between any two of 0.848 g/cm³, 0.85 g/cm³, 0.852 g/cm³, 0.854 g/cm³, 0.856 g/cm³, 0.858 g/cm³, 0.86 g/cm³, 0.862 g/cm³, 0.864 g/cm³, and 0.866 g/cm³, and/or (2) a kinematic viscosity of 15 to 70 mm²/s or at least any one of, equal to any one of, or between any two of 15 mm²/s, 20 mm²/s, 25 mm²/s, 30 mm²/s, 35 mm²/s, 40 mm²/s, 45 mm²/s, 50 mm²/s, 55 mm²/s, 60 mm²/s, 65 mm²/s, and 70 mm²/s, at 40 °C and 3.5 to 10 mm²/s or at least any one of, equal to any one of, or between any two of 3.5 mm²/s, 4.0 mm²/s, 4.5 mm²/s, 5.0 mm²/s, 5.5 mm²/s, 6.0 mm²/s, 6.5 mm²/s, 7.0 mm²/s, 7.5 mm²/s, 8.0 mm²/s, 8.5 mm²/s, 9.0 mm²/s, 9.5 mm²/s and 10 mm²/s at 100 °C. In some aspects, the styrenic block copolymer can be a styrene-butadiene-styrene (SBS) block copolymer, a styrene-isoprene-styrene (SIS) block copolymer, a styrene-ethylene/propylene (SEP) block copolymer, a styrene-ethylene/propylene-styrene (SEPS) block copolymer, a styrene-ethylene/butylene (SEB) block copolymer, a styrene-ethylene/butylene-styrene (SEBS) block copolymer, a styrene-[ethylene-(ethylenepropylene)]-styrene (SEEPS) block copolymer, or any combination thereof, preferably a SBS block copolymer, a SEBS block copolymer, SEPS block copolymer or any combination thereof. Without intending to be limited by theory, it is believed that, an effective amount of a hydrogenated paraffin oil added to an HDPE polymer may function as a plasticizer for HDPE polymer. Addition of an effective amount of a styrenic block copolymer with an HDPE polymer and an hydrogenated paraffin oil may increase viscosity of the resulting composition and may reduce leaching of hydrogenated paraffin oil from the resulting composition.

In some aspects, the HDPE resin composition can include an internal lubricant. In some aspects, the HDPE resin composition can include 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the internal lubricant based on total weight of the HDPE resin composition. In some aspects, the HDPE resin composition can include the HDPE polymer, the metallocene polyethylene wax, and the internal lubricant. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the internal lubricant based on total weight of the HDPE resin composition. In some particular aspects, the internal lubricant can be a metal stearate, erucamide, oleamide, ethylene bis-stearamide, glycolmonostearate, or any combination thereof. In some particular aspects, the metal stearate can be a zinc stearate. In some aspects, the internal lubricant can be erucamide. Without intending to be limited by theory, it is believed that an effective amount of an internal lubricant added to an HDPE polymer may result in a composition with reduced melt viscosity and screw torque compared to the HDPE polymer. Such composition may require less processing energy compared to the HDPE polymer for mixing and plastification.

In some aspects, the HDPE resin composition can include an fluoropolymer. In some aspects, the HDPE resin composition can include 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the fluoropolymer based on total weight of the HDPE resin composition. In some aspects, the HDPE resin composition can include the HDPE polymer, the metallocene polyethylene wax, and the fluoropolymer. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the fluoropolymer based on total weight of the HDPE resin composition. In some particular aspects, the fluoropolymer can have (1) a density of 1.9 g/cm³ to 1.96 g/cm³, or at least any one of, equal to any one of, or between any two of 1.9 g/cm³, 1.905 g/cm³, 1.91 g/cm³, 1.915 g/cm³, 1.92 g/cm³, 1.925 g/cm³, 1.93 g/cm³, 1.935 g/cm³, 1.94 g/cm³, 1.945 g/cm³, 1.95 g/cm³, 1.955 g/cm³, and 1.96 g/cm³, and/or (2) a MFI of 5 g/10 min to 25 g/10 min, or at least any one of, equal to any one of, or between any two of 5 g/10 min, 7 g/10 min, 9 g/10 min, 11 g/10 min, 13 g/10 min, 15 g/10 min, 17 g/10 min, 19 g/10 min, 21 g/10 min, 23 g/10 min, and 25 g/10 min at 265 °C and 5 kg as measured by ISO 1133. In some aspects, the fluoropolymer can be a polytetrafluoroethylene. Without intending to be limited by theory, it is believed that, compositions obtained by addition of a HDPE polymer and an effective amount of a fluoropolymer may show reduced die buildup and melt fracture compared to the HDPE polymer during a melt impregnation process. A fiber composite obtained by melt impregnation using such composition may have relatively higher gloss, compared to a fiber composite obtained by melt impregnation using the HDPE polymer. Fluoropolymer that are useful in the current invention includes but are not limited to fluoropolymers those are commercially available under the brand name DYNAMAR 5929 sold by 3M, Dynamar FX5911 sold by 3M, VITON FREEFLOW Z200 sold by Dupont, and/or VITON FREEFLOW Z210 sold by Dupont,

In some aspects, the HDPE resin composition can include a high molecular weight polysiloxane mixed with an amorphous silica. In some aspects, the HDPE resin composition can include 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the high molecular weight polysiloxane mixed with an amorphous silica based on total weight of the HDPE resin composition. In some aspects, the HDPE resin composition can include the HDPE polymer, the metallocene polyethylene wax, and the high molecular weight polysiloxane mixed with an amorphous silica. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the high molecular weight polysiloxane mixed with an amorphous silica based on total weight of the HDPE resin composition. In some particular aspects, the high molecular weight polysiloxane mixed with an amorphous silica can have a density of 0.965 g/cm³ to 1.25 g/cm³, or at least any one of, equal to any one of, or between any two of 0.965 g/cm³, 0.975 g/cm³, 0.98 g/cm³, 0.985 g/cm³, 0.99 g/cm³, 0.995 g/cm³, 1.00 g/cm³, 1.05 g/cm³, 1.1 g/cm³, 1.15 g/cm³, 1.2 g/cm³, 1. g/cm³, 1.935 g/cm³, 1.94 g/cm³, 1.945 g/cm³, 1.95 g/cm³, 1.955 g/cm³, and 1.25 g/cm³ at 25 °C. Without intending to be limited by theory, it is believed that compositions obtained by addition of a HDPE polymer and an effective amount of a high molecular weight polysiloxane mixed with an amorphous silica may show increased flowability compared to the HDPE polymer, which might be beneficial during melt impregnation process. A fiber composite obtained by melt impregnation using such composition may have relatively better surface finish, compared to a fiber composite obtained by melt impregnation using the HDPE polymer.

In some aspects, the HDPE resin composition can include a maleic anhydride grafted polyethylene. In some aspects, the HDPE resin composition can include 1 wt. % to 20 wt. % or at least any one of, equal to any one of, or between any two of 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, %, 17 wt. %, 18 wt. %, 19 wt. %, and 20 wt. % of the of the maleic anhydride grafted polyethylene based on total weight of the HDPE resin composition. In some aspects, the HDPE resin composition can include the HDPE polymer, the metallocene polyethylene wax, and the maleic anhydride grafted polyethylene. In some aspects, the HDPE resin composition can include 50 wt. % to 98.5 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 98.5 wt. % of the HDPE polymer and 0.01 wt. % to 20 wt. % or at least any one of, equal to any one of, or between any two of 0.01 wt. %, 0.1 wt. %, 0.5 wt. %, 1 wt. %, 1.5 wt. %, 2 wt. %, 2.5 wt. %, 3 wt. %, 3.5 wt. %, 4 wt. %, 4.5 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, %, 17 wt. %, 18 wt. %, 19 wt. %, and 20 wt. % of the polyethylene wax, and 1 wt. % to 20 wt. % or at least any one of, equal to any one of, or between any two of 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, %, 17 wt. %, 18 wt. %, 19 wt. %, and 20 wt. % of the maleic anhydride grafted polyethylene based on total weight of the HDPE resin composition.

In some aspects, the HDPE resin composition can include a quaterrylenetetracarboxylic diimide. In some aspects, the HDPE resin composition can include 0.01 wt. % to 5 wt. % or at least any one of, equal to any one of, or between any two of 0.01 wt. %, 0.02 wt. %, 0.03 wt. %, 0.04 wt. %, 0.05 wt. %, 0.1 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the quaterrylenetetracarboxylic diimide based on total weight of the HDPE resin composition. In some aspects, the HDPE resin composition can include the HDPE polymer, the metallocene polyethylene wax, and the quaterrylenetetracarboxylic diimide. In some aspects, the HDPE resin composition can include 50 wt. % to 99 wt. % or at least any one of, equal to any one of, or between any two of 50 wt. %, 55 wt. %, 60 wt. %, 65 wt. %, 70 wt. %, 75 wt. %, 80 wt. %, 85 wt. %, 90 wt. %, 95 wt. %, and 99 wt. % of the HDPE polymer, 0.01 wt. % to 5 wt. % or at least any one of, equal to any one of, or between any two of 0.01 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the metallocene polyethylene wax, and 0.01 wt. % to 5 wt. % or at least any one of, equal to any one of, or between any two of 0.01 wt. %, 0.02 wt. %, 0.03 wt. %, 0.04 wt. %, 0.05 wt. %, 0.1 wt. %, 0.5 wt. %, 1 wt. %, 1.5 wt. %, 2 wt. %, 2.5 wt. %, 2 wt. %, 2.5 wt. %, 3 wt. %, 3.5 wt. %, 4 wt. %, 4.5 wt. %, and 5 wt. % of the quaterrylenetetracarboxylic diimide based on total weight of the HDPE resin composition. In some aspects, the quaterrylenetetracarboxylic diimide can be a near IR (NIR) absorber, and improve interlayer adhesion in fiber composite contain the HDPE resin composition.

### B. Fiber composite

Fiber composites of the current invention can include at least 60 wt. % of a fiber material and a HDPE resin composition. In some aspects, the fiber composite can include 60 wt. % to 80 wt. % or at least any one of, equal to any one of, or between any two of 60 wt. %, 61 wt. %, 62 wt. %, 63 wt. %, 64 wt. %, 65 wt. %, 66 wt. %, 67 wt. %, 68 wt. %, 69 wt. %, 70 wt. %, 71 wt. %, 72 wt. %, 73 wt. %, 74 wt. %, 75 wt. %, 76 wt. %, 77 wt. %, 78 wt. %, 79 wt. %, and 80 wt. % of the fiber material and 20 wt. % to 40 wt. % or at least any one of, equal to any one of, or between any two of 20 wt. %, 21 wt. %, 22 wt. %, 23 wt. %, 24 wt. %, 25 wt. %, 26 wt. %, 27 wt. %, 28 wt. %, 29 wt. %, 30 wt. %, 31 wt. %, 32 wt. %, 33 wt. %, 34 wt. %, 35 wt. %, 36 wt. %, 37 wt. %, 38 wt. %, 39 wt. %, and 40 wt. % of the HDPE resin composition based on total weight of the composite. In some aspects, the HDPE resin composition can be one or more HDPE resin compositions as discussed above. In some aspects, the fiber material can be a continuous fiber. In some particular aspects, the continuous fiber can be a continuous glass, carbon, ceramic, aramid, basalt or polymeric fiber, or any combination thereof. In some aspects, the fiber composite can be a UD tape. In some aspects, the UD tape can have thickness 0.1 mm to 0.5 mm or at least any one of, equal to any one of, or between any two of 0.1 mm, 0.15 mm, 0.2 mm, 0.25 mm, 0.3 mm, 0.35 mm, 0.4 mm, 0.45 mm, and 0.5 mm. In some aspects, the UD tape can have (1) a mean "RFAC" % of 65 to 90 or at least any one of, equal to any one of, or between any two of 65, 70, 75, 80, 85 and 90 and/or (2) a COV % of 3 to 20 or at least any one of, equal to any one of, or between any two of 3, 4, 5, 6, 7, 8, 9, 10, 11, 12, 13, 14, 15, 16, 17, 18, 19 and 20.

### C. Methods for making the Fiber composite

Fiber composites of the current invention can be made by impregnating a HDPE resin composition of the current invention with a fiber material. In some aspects, the fiber composite can be made by a melt impregnation process. In some aspects, the fiber composite can be a UD tape and the melt impregnation process can include, spreading one or more bundles of the fiber material in a spreaded fiber layer, casting a molten HDPE resin composition in to a moving bed of the spreaded fiber layer. In some aspects, the spreaded fiber layer can be moved at a line speed of 10 m/min to 15 m/min or at least any one of, equal to any one of, or between any two of 10 m/min, 10.5 m/min, 11 m/min, 11.5 m/min, 12 m/min, 12.5 m/min, 13 m/min, 13.5 m/min, 14 m/min, 14.5 m/min, and 15 m/min. In some aspects, a fiber composite such as a UD can be made by a melt impregnation technology as disclosed in Patent Application Publication No. PCT/IB2018/051673 to Ratouit et al.*,.*

Fig. 1 illustrates a melt impregnation system 100 and an example of a melt impregnation process for producing a UD tape. The system 100 can include one or more guiding elements 164a-164d and an extruder 104. The melt impregnation process can include, spreading (not shown) a first set of one or more bundles of a fiber material into a first spread fiber layer (102a), spreading (not shown) a second set of one or more bundles of a fiber material into a second spread fiber layer (102b). The HDPE resin composition can be melted and the molten HDPE resin composition can be introduced into the second spread fiber layer using an extruder 104. The second spread fiber layer can be moved underneath and relative to an outlet 112 of a die 108 of the extruder while molten HDPE resin composition is extruded through the outlet. A pressure within extruder 104 (e.g., within die 108) can be a suitable pressure, such as, for example, a pressure that is greater than or substantially equal to any one of, or between any two of: 5, 6, 7, 8, 9, 10, 12, 14, 16, 18, 20, or 25 bar gauge (e.g., between approximately 5 bar gauge and approximately 25 bar gauge). A temperature within extruder 104 (e.g., within die 108) can be a temperature that is greater than or substantially equal to any one of, or between any two of: 190°C, 200°C, 210°C, 220°C, 230°C or 240°C. The molten HDPE resin composition from die 108 can be provided as a sheet or film; for example, outlet 112 can be an elongated slit. The outlet 112 can have a width 114 that is less than or substantially equal to any one of, or between any two of: 0.2, 0.3, 0.4, 0.5, or 0.6 mm (e.g., between approximately 0.2 mm and approximately 0.6 mm). A length of outlet 112 (measured perpendicularly to width 114) can be substantially equal to a width of a portion of the second spread fiber layer that underlies the outlet. Die 108 can include an interior passageway 120 that extends to outlet 112 and through which the molten HDPE resin composition can be provided to the outlet. Interior passageway 120 can be in fluid communication with a manifold or conduit 116 of die 108 such that the molten HDPE resin composition can be provided from the manifold or conduit, through the interior passageway, and to outlet 112. During introduction of the molten HDPE resin composition into the second spread fiber layer, the second spread fiber layer can be in contact with or in close proximity to die 108 (e.g., within 1, 2, 3, 4, or 5 mm of the die), and more particularly, the portion of the die that defines outlet 112. Such placement of the second spread fiber layer relative to die 108 can facilitate extruder 104 in pushing the molten HDPE resin composition into the second spread fiber layer, thereby enhancing impregnation of the second spread fiber layer.

During introduction of the molten HDPE resin composition into the second spread fiber layer, the second spread fiber layer can be moved in a first direction 124 underneath and relative to outlet 112, and the molten HDPE resin composition can be extruded through the outlet in an extrusion direction 128 that is perpendicular to, or has a component 132 that is counter to, the first direction. In some aspects, the second spread fiber layer can be moved in the first direction 124 at a line speed of 8 m/min to 20 m/min or 10 m/min to 15 m/min or at least any one of, equal to any one of, or between any two of 8 m/min, 8.5 m/min, 9 m/min, 9.5 m/min, 10 m/min, 10.5 m/min, 11 m/min, 11.5 m/min, 12 m/min, 12.5 m/min, 13 m/min, 13.5 m/min, 14 m/min, 14.5 m/min, 15 m/min, 15.5 m/min, 16 m/min, 16.5 m/min, 17 m/min, 17.5 m/min, 18 m/min, 18.5 m/min, 19 m/min, 19.5 m/min, and 20 m/min. Extrusion direction 128 can be parallel to a longitudinal axis 136 of interior passageway 120 and/or perpendicular to a plane 140 of outlet 112 (e.g., a plane in which at least a majority of the perimeter of the outlet lies). To illustrate, an angle 134 between first direction 124 and extrusion direction 128 can be less than or substantially equal to any one of, or between any two of: 70, 71, 72, 73, 74, 75, 76, 77, 78, 79, 80, 81, 82, 83, 84, 85, 86, 87, 88, 89, or 90 degrees (e.g., between approximately 85 degrees and 90 degrees). In at least this way, movement of the second spread fiber layer relative to die 108 can be used to encourage (or at least not discourage) urging of the molten HDPE resin composition exiting the die into the second spread fiber layer.

System 100 can include a scraper 144 disposed downstream of die outlet 112 and under which the second spread fiber layer can be passed. Scraper 144 can include an upstream portion 156a and a downstream portion 156b, where a distance 160a between the second spread fiber layer and the upstream portion is larger than a corresponding (i.e., measured in the same direction) distance 160b between the second spread fiber layer and the downstream portion. The second spread fiber layer can be in contact with or in close proximity to scraper 144 (e.g., within 1, 2, 3, 4, or 5 mm of the scraper). In these ways, the molten HDPE resin composition can accumulate between scraper 144 and the second spread fiber layer, and, via the inclined orientation of the scraper relative to the second spread fiber layer, be urged into the second spread fiber layer. As shown, scraper 144 is coupled to (e.g., forms part of) die 108; however, in other embodiments, a scraper and a die can be separate components. In impregnation system 100, a surface of scraper 144 that faces the second spread fiber layer is planar; however, in other embodiments, such a surface of a scraper can be curved (e.g., concave or convex).

System 100 can include one or more guiding elements, 164a-164d, for guiding the first and second spread fiber layers relative to die 108; for example: guiding elements 164c and 164d can guide the second spread fiber layer underneath outlet 112 of the die; and guiding elements 164a-164c can guide the first spread fiber layer over the die. Such guiding elements can comprise bars, plates, rollers, and/or the like. Guiding elements 164a and 164d can be spreading elements. Guiding element 164c can be a pressing element. Scraper 144, to the extent that it influences the path of the second spreaded fiber layer underneath die 108, can be characterized as a guiding element. In some aspects, at least one of guiding elements 164a-164d can be heated at a temperature of the guiding element can be greater than or substantially equal to any one of, or between any two of: 80, 90, 100, 110, 120, 130, 140, 150, 160, 170, 180, 190, or 200 °C (e.g., between approximately 100 °C and approximately 180 °C). In impregnation system 100, a heat source 176, such as an infrared heater, can be positioned to heat the spread fiber layers, which can enhance impregnation of the spreaded fiber layers. A temperature of heat source 176 can be a suitable temperature, such as, for example, a temperature described above for a heated guiding element.

Embodiments of the impregnation systems (e.g., 100) are referenced to illustrate methods of FIG. 1 however, these systems are not limiting on those methods, which can be performed using suitable systems.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

One embodiment is directed to a fiber composite comprising at least 60 wt. %, preferably 60 wt. % to 80 wt.% of a fiber material based on total weight of the composite and a high density polyethylene (HDPE) resin composition comprising a HDPE polymer and a metallocene polyethylene wax. The fiber composite may comprise 20 wt. % to 40 wt.% of the HDPE resin composition, based on total weight of the composite.

## Claims

1. A fiber composite comprising at least 60 wt. %, preferably 60 wt. % to 80 wt.% of a fiber material based on total weight of the composite and a high density polyethylene (HDPE) resin composition comprising a HDPE polymer and a metallocene polyethylene wax, wherein the HDPE polymer has a density of 0.925 g/cm³ to 0.975 g/cm³ measured according to ASTM D 1505;
wherein the HDPE resin composition comprises 50 wt. % to 99 wt. % of the HDPE polymer and 0.01 wt. % to 10 wt. % of the metallocene polyethylene wax, based on total weight of the HDPE resin composition.

2. The fiber composite of claim 1, wherein the HDPE polymer has a melt flow index (MFI) of 25 to 35 g/10 min at 190 °C and 2.16 kg as measured by ISO 1133, and/or the metallocene polyethylene wax has a drop point of 125 °C to 130 °C as measured by ASTM 3954, a viscosity of 40 mPa.s to 500 mPa.s at 140 °C as measured by DIN 53019, and/or a density of 0.95 g/cm³ to 1.00 g/cm³ as measured by ISO 1183.

3. The fiber composite of any one of claims 1 to 2 , wherein the HDPE resin composition comprises 0.5 wt. % to 25 wt. % of a low density polyethylene (LDPE) polymer based on total weight of the HDPE resin composition, wherein the LDPE polymer has a density of 0.913 g/cm³ to 1.19 g/cm³ as measured by ASTM D 1505, and preferably at least one of the following features: 1) a melting point of 100 °C to 140 °C as measured by DIN 53765, and/or 2) a MFI of 50 g/10 min to 100 g/10 min at 190 °C and 2.16 kg as measured by ISO 1133, and/or 3) a Vicat softening temperature of 68 °C to 86 °C at 10N and 50 °C/h as measured by A50, ISO306.

4. The fiber composite of any one of claims 1 to 3, wherein the HDPE resin composition comprises 0.5 wt. % to 35 wt. % of an ethylene-vinyl acetate (EVA) polymer based on total weight of the HDPE resin composition, wherein the EVA polymer has a MFI 150 g/10 to 800 g/10 min at 190 °C and 2.16 kg as measured by ISO 1133.

5. The fiber composite of any one of claims 1 to 4, wherein the HDPE resin composition comprises 0.5 wt. % to 25 wt. % of a linear low density polyethylene (LLDPE polymer) based on total weight of the HDPE resin composition, wherein the LLDPE polymer has a density of 0.870 g/cm³ to 0.963 g/cm³ as measured by ASTM D 1505, and preferably at least one of the following features: 1) a MFI of 50 g/10 min to 100 g/10 min at 190 °C and 2.16 kg as measured by ISO 1133 and/or a 2) Vicat softening temperature of 41 °C to 130 °C at 10N and 50 °C/h as measured by A50, ASTMD1525.

6. The fiber composite of any one of claims 1 to 5, wherein the HDPE resin composition comprises an ethylene-alpha butene copolymer, an ethylene-alpha hexene copolymer and an ethylene-alpha octene copolymer, wherein the total wt.% of the ethylene-alpha butene copolymer, ethylene-alpha hexene copolymer and the ethylene-alpha octene copolymer is 0.5 wt. % to 30 wt. % based on total weight of the HDPE resin composition.

7. The fiber composite of any one of claims 1 to 6, wherein the HDPE resin composition comprises:
0.01 wt. % to 5 wt. % of a hydrogenated paraffin oil based on total weight of the HDPE resin composition, wherein the hydrogenated paraffin oil has a density of 0.848 g/cm³ to 0.866 g/cm³ and/or a kinematic viscosity of 15 to 70 mm²/s at 40 °C and 3.5 to 10 mm²/s at 100 °C; and
0.01 wt. % to 30 wt. % of a styrenic block copolymer based on total weight of the HDPE resin composition, wherein the styrenic block copolymer is a styrene-butadiene-styrene (SBS) block copolymer, a styrene-isoprene-styrene (SIS) block copolymer, a styrene-ethylene/propylene (SEP) block copolymer, a styrene-ethylene/propylene-styrene (SEPS) block copolymer, a styrene-ethylene/butylene (SEB) block copolymer, a styrene-ethylene/butylene-styrene (SEBS) block copolymer, a styrene-[ethylene-(ethylene-propylene)]-styrene (SEEPS) block copolymer, or any combination thereof, preferably a SBS block copolymer, a SEBS block copolymer, SEPS block copolymer, or any combination thereof.

8. The fiber composite of any one of claims 1 to 7, wherein the HDPE resin composition comprises 0.01 wt. % to 5 wt. % of an internal lubricant based on total weight of the HDPE resin composition, wherein the internal lubricant is a metal stearate, erucamide, oleamide, ethylene bis-stearamide, glycolmonostearate, or any combination thereof, preferably erucamide.

9. The fiber composite of any one of claims 1 to 8, wherein the HDPE resin composition comprises 0.01 wt. % to 5 wt. % of a fluoropolymer based on total weight of the HDPE resin composition, wherein the fluoropolymer has a density of 1.9 g/ cm³ to 1.96 g/ cm³, a melting point of 110 °C to 126 °C, and/or a MFI 5 to 25 g/10 min at 265 °C and 5 kg as measured by ISO 1133.

10. The fiber composite of any one of claims 1 to 9, wherein the HDPE resin composition has a MFI of 9 to 90 g/10 min at 190 °C and 2.16 kg as measured by ISO 1133, and/or a crystallinity temperature of 122 °C to 133 °C in accordance with the DSC measurement method as described in the description.

11. The fiber composite of any one of claims 1 to 10, wherein the fiber material is a continuous fiber, preferably a continuous glass, carbon, ceramic, aramid, basalt fiber, or polymeric fiber, or any combination thereof.

12. The fiber composite of any one of claims 1 to 11, wherein the fiber composite is a unidirectional tape with a thickness 0.1 mm to 0.5 mm.

13. A method for making the fiber composite of any one of claims 1 to 12, the method comprising impregnating the HDPE resin composition with the fiber material, wherein the method preferably comprises casting the HDPE resin composition on a moving bed of continuous fibers, wherein the moving bed has a line speed of 10 m/min to 15 m/min.

## Patentansprüche

1. Faserverbundstoff, umfassend mindestens 60 Gew.-%, bevorzugt 60 Gew.-% bis 80 Gew.-% eines Fasermaterials, basierend auf dem Gesamtgewicht des Verbundstoffs, und eine Harzzusammensetzung aus Polyethylen hoher Dichte (HDPE), die ein HDPE-Polymer und ein Metallocen-Polyethylenwachs umfasst, wobei das HDPE-Polymer eine Dichte von 0,925 g/cm³ bis 0,975 g/cm³ aufweist, gemessen nach ASTM D 1505;
wobei die HDPE-Harzzusammensetzung 50 Gew.-% bis 99 Gew.-% des HDPE-Polymers und 0,01 Gew.-% bis 10 Gew.-% des Metallocen-Polyethylenwachses, basierend auf dem Gesamtgewicht der HDPE-Harzzusammensetzung, umfasst.

2. Faserverbundstoff nach Anspruch 1, wobei das HDPE-Polymer einen Schmelzflussindex (MFI) von 25 bis 35 g/10 min bei 190 °C und 2,16 kg, gemessen nach ISO 1133, aufweist und/oder das Metallocen-Polyethylenwachs einen Tropfpunkt von 125 °C bis 130 °C, gemessen nach ASTM 3954, eine Viskosität von 40 mPa.s bis 500 mPa.s bei 140 °C, gemessen nach DIN 53019, und/oder eine Dichte von 0,95 g/cm³ bis 1,00 g/cm³, gemessen nach ISO 1183, aufweist.

3. Faserverbundstoff nach einem der Ansprüche 1 bis 2, wobei die HDPE-Harzzusammensetzung 0,5 Gew.-% bis 25 Gew.-% eines Polyethylens niedriger Dichte (LDPE), basierend auf dem Gesamtgewicht der HDPE-Harzzusammensetzung, umfasst, wobei das LDPE-Polymer eine Dichte von 0,913 g/cm³ bis 1,19 g/cm³, gemessen nach ASTM D 1505, und bevorzugt mindestens eines der folgenden Merkmale aufweist: 1) einen Schmelzpunkt von 100 °C bis 140 °C, gemessen nach DIN 53765, und/oder 2) einen MFI von 50 g/10 min bis 100 g/10 min bei 190 °C und 2,16 kg, gemessen nach ISO 1133, und/oder 3) eine Vicat-Erweichungstemperatur von 68 °C bis 86 °C bei 10 N und 50 °C/h, gemessen nach A50, 150306.

4. Faserverbundstoff nach einem der Ansprüche 1 bis 3, wobei die HDPE-Harzzusammensetzung 0,5 Gew.-% bis 35 Gew.-% eines Ethylen-Vinylacetat-(EVA)-Polymers, basierend auf dem Gesamtgewicht der HDPE-Harzzusammensetzung, umfasst, wobei das EVA-Polymer einen MFI von 150 g/10 bis 800 g/10 min bei 190 °C und 2,16 kg aufweist, gemessen nach ISO 1133.

5. Faserverbundstoff nach einem der Ansprüche 1 bis 4, wobei die HDPE-Harzzusammensetzung 0,5 Gew.-% bis 25 Gew.-% eines linearen Polyethylens niedriger Dichte (LLDPE-Polymer), basierend auf dem Gesamtgewicht der HDPE-Harzzusammensetzung, umfasst, wobei das LLDPE-Polymer eine Dichte von 0,870 g/cm³ bis 0,963 g/cm³, gemessen nach ASTM D 1505, und bevorzugt mindestens eines der folgenden Merkmale aufweist: 1) einen MFI von 50 g/10 min bis 100 g/10 min bei 190 °C und 2,16 kg, gemessen nach ISO 1133, und/oder eine 2) Vicat-Erweichungstemperatur von 41 °C bis 130 °C bei 10 N und 50 °C/h, gemessen nach A50, ASTMD1525.

6. Faserverbundstoff nach einem der Ansprüche 1 bis 5, wobei die HDPE-Harzzusammensetzung ein Ethylen-alpha-Buten-Copolymer, ein Ethylen-alpha-Hexen-Copolymer und ein Ethylen-alpha-Octen-Copolymer umfasst, wobei die gesamten Gew.-% des Ethylen-alpha-Buten-Copolymers, des Ethylen-alpha-Hexen-Copolymers und des Ethylen-alpha-Octen-Copolymers 0,5 Gew.-% bis 30 Gew.-%, basierend auf dem Gesamtgewicht der HDPE-Harzzusammensetzung, betragen.

7. Faserverbundstoff nach einem der Ansprüche 1 bis 6, wobei die HDPE-Harzzusammensetzung umfasst:
0,01 Gew.-% bis 5 Gew.-% eines hydrierten Paraffinöls, basierend auf dem Gesamtgewicht der HDPE-Harzzusammensetzung, wobei das hydrierte Paraffinöl eine Dichte von 0,848 g/cm³ bis 0,866 g/cm³ und/oder eine kinematische Viskosität von 15 bis 70 mm²/s bei 40 °C und 3,5 bis 10 mm²/s bei 100 °C aufweist; und
0,01 Gew.-% bis 30 Gew.-% eines Styrol-Blockcopolymers, basierend auf dem Gesamtgewicht der HDPE-Harzzusammensetzung, wobei das Styrol-Blockcopolymer ein Styrol-Butadien-Styrol-(SBS)-Blockcopolymer, ein Styrol-Isopren-Styrol-(SIS)-Blockcopolymer, ein Styrol-Ethylen/Propylen-(SEP)-Blockcopolymer, ein Styrol-Ethylen/Propylen-Styrol-(SEPS)-Blockcopolymer, ein Styrol-Ethylen/Butylen-(SEB)-Blockcopolymer, ein Styrol-Ethylen/Butylen-Styrol-(SEBS)-Blockcopolymer, ein Styrol-[Ethylen-(Ethylen-Propylen)]-Styrol-(SEEPS)-Blockcopolymer oder eine beliebige Kombination davon, bevorzugt ein SBS-Blockcopolymer, ein SEBS-Blockcopolymer, SEPS-Blockcopolymer oder eine beliebige Kombination davon ist.

8. Faserverbundstoff nach einem der Ansprüche 1 bis 7, wobei die HDPE-Harzzusammensetzung 0,01 Gew.-% bis 5 Gew.-% eines internen Schmiermittels, basierend auf dem Gesamtgewicht der HDPE-Harzzusammensetzung, umfasst, wobei das interne Schmiermittel ein Metallstearat, Erucamid, Oleamid, Ethylen-bis-Stearamid, Glykolmonostearat oder eine beliebige Kombination davon, bevorzugt Erucamid, ist.

9. Faserverbundstoff nach einem der Ansprüche 1 bis 8, wobei die HDPE-Harzzusammensetzung 0,01 Gew.-% bis 5 Gew.-% eines Fluorpolymers, basierend auf dem Gesamtgewicht der HDPE-Harzzusammensetzung, umfasst, wobei das Fluorpolymer eine Dichte von 1,9 g/cm³ bis 1,96 g/cm³, einen Schmelzpunkt von 110 °C bis 126 °C und/oder einen MFI von 5 bis 25 g/10 min bei 265 °C und 5 kg aufweist, gemessen nach ISO 1133.

10. Faserverbundstoff nach einem der Ansprüche 1 bis 9, wobei die HDPE-Harzzusammensetzung einen MFI von 9 bis 90 g/10 min bei 190 °C und 2,16 kg, gemessen nach ISO 1133, und/oder eine Kristallinitätstemperatur von 122 °C bis 133 °C gemäß dem DSC-Messverfahren, wie in der Beschreibung beschrieben, aufweist.

11. Faserverbundstoff nach einem der Ansprüche 1 bis 10, wobei das Fasermaterial eine Endlosfaser, bevorzugt eine Endlosfaser aus Glas, Kohlenstoff, Keramik, Aramid, Basaltfaser oder Polymerfaser oder eine beliebige Kombination davon ist.

12. Faserverbundstoff nach einem der Ansprüche 1 bis 11, wobei der Faserverbundstoff ein unidirektionales Band mit einer Dicke von 0,1 mm bis 0,5 mm ist.

13. Verfahren zum Herstellen des Faserverbundstoffs nach einem der Ansprüche 1 bis 12, wobei das Verfahren das Imprägnieren der HDPE-Harzzusammensetzung mit dem Fasermaterial umfasst, wobei das Verfahren bevorzugt das Gießen der HDPE-Harzzusammensetzung auf einem Bewegtbett aus Endlosfasern umfasst, wobei das Bewegtbett eine Liniengeschwindigkeit von 10 m/min bis 15 m/min aufweist.

## Revendications

1. Composite de fibres comprenant au moins 60 % en poids, de préférence de 60 % en poids à 80 % en poids d'un matériau fibreux sur la base du poids total du composite et une composition de résine de polyéthylène haute densité (HDPE) comprenant un polymère HDPE et une cire de polyéthylène métallocène, dans lequel le polymère HDPE présente une densité de 0,925 g/cm³ à 0,975 g/cm³ mesurée conformément à la norme ASTM D 1505 ;
dans lequel la composition de résine HDPE comprend 50 % en poids à 99 % en poids du polymère HDPE et 0,01 % en poids à 10 % en poids de la cire de polyéthylène métallocène, sur la base du poids total de la composition de résine HDPE.

2. Composite de fibres selon la revendication 1, dans lequel le polymère HDPE présente un indice de fluidité à chaud (MFI) de 25 à 35 g/10 min à 190 °C et 2,16 kg tel que mesuré selon la norme ISO 1133, et/ou la cire de polyéthylène métallocène présente un point de goutte de 125 °C à 130 °C tel que mesuré selon la norme ASTM 3954, une viscosité de 40 mPa.s à 500 mPa.s à 140 °C telle que mesurée selon la norme DIN 53019, et/ou une densité de 0,95 g/cm³ à 1,00 g/cm³ telle que mesurée selon la norme ISO 1183.

3. Composite de fibres selon l'une quelconque des revendications 1 à 2, dans lequel la composition de résine HDPE comprend 0,5 % en poids à 25 % en poids d'un polymère de polyéthylène basse densité (LDPE) sur la base du poids total de la composition de résine HDPE, dans lequel le polymère LDPE présente une densité de 0,913 g/cm³ à 1,19 g/cm³ telle que mesurée selon la norme ASTM D 1505, et de préférence au moins l'une des caractéristiques suivantes : 1) un point de fusion de 100 °C à 140 °C, tel que mesuré selon la norme DIN 53765, et/ou 2) un MFI de 50 g/10 min à 100 g/10 min à 190 °C et 2,16 kg tel que mesuré selon la norme ISO 1133, et/ou 3) une température de ramollissement Vicat de 68 °C à 86 °C à 10 N et 50 °C/h telle que mesurée par A50, selon la norme IS0306.

4. Composite de fibres selon l'une quelconque des revendications 1 à 3, dans lequel la composition de résine HDPE comprend 0,5 % en poids à 35 % en poids d'un polymère d'éthylène-acétate de vinyle (EVA) sur la base du poids total de la composition de résine HDPE, dans lequel le polymère EVA présente un MFI de 150 g/10 à 800 g/10 min à 190 °C et 2,16 kg tel que mesuré selon la norme ISO 1133.

5. Composite de fibres selon l'une quelconque des revendications 1 à 4, dans lequel la composition de résine HDPE comprend 0,5 % en poids à 25 % en poids d'un polyéthylène basse densité linéaire (polymère LLDPE) sur la base du poids total de la composition de résine HDPE, dans lequel le polymère LLDPE présente une densité de 0,870 g/cm³ à 0,963 g/cm³ telle que mesurée selon la norme ASTM D 1505, et de préférence au moins l'une des caractéristiques suivantes : 1) un MFI de 50 g/10 min à 100 g/10 min à 190 °C et 2,16 kg, tel que mesuré selon la norme ISO 1133 et/ou 2) une température de ramollissement Vicat de 41 °C à 130 °C à 10 N et 50 °C/h, telle que mesurée par A50, selon la norme ASTMD1525.

6. Composite de fibres selon l'une quelconque des revendications 1 à 5, dans lequel la composition de résine HDPE comprend un copolymère éthylène-alpha-butène, un copolymère éthylène-alpha-hexène et un copolymère éthylène-alpha-octène, dans lequel le % total en poids du copolymère éthylène-alpha-butène, du copolymère éthylène-alpha-hexène et du copolymère éthylène-alpha-octène va de 0,5 % à 30 % en poids sur la base du poids total de la composition de résine HDPE.

7. Composite de fibres selon l'une quelconque des revendications 1 à 6, dans lequel la composition de résine HDPE comprend :
0,01 % en poids à 5 % en poids d'une huile de paraffine hydrogénée sur la base du poids total de la composition de résine HDPE, dans lequel l'huile de paraffine hydrogénée présente une densité de 0,848 g/cm³ à 0,866 g/cm³ et/ou une viscosité cinématique de 15 à 70 mm²/s à 40 °C et de 3,5 à 10 mm²/s à 100 °C ; et
0,01 % en poids à 30 % en poids d'un copolymère séquencé styrénique sur la base du poids total de la composition de résine HDPE, dans lequel le copolymère séquencé styrénique est un copolymère séquencé styrène-butadiène-styrène (SBS), un copolymère séquencé styrène-isoprène-styrène (SIS), un copolymère séquencé styrène-éthylène/propylène (SEP), un copolymère séquencé styrène-éthylène/propylène-styrène (SEPS), un copolymère séquencé styrène-éthylène/butylène (SEB), un copolymère séquencé styrène-éthylène/butylène-styrène (SEBS), un copolymère séquencé styrène-[éthylène-(éthylène-propylène)]-styrène (SEEPS), ou toute combinaison de ceux-ci, de préférence un copolymère séquencé SBS, un copolymère séquencé SEBS, un copolymère séquencé SEPS, ou toute combinaison de ceux-ci.

8. Composite de fibres selon l'une quelconque des revendications 1 à 7, dans lequel la composition de résine HDPE comprend 0,01 % en poids à 5 % en poids d'un lubrifiant interne sur la base du poids total de la composition de résine HDPE, dans lequel le lubrifiant interne est un stéarate de métal, un érucamide, un oléamide, un éthylène bis-stéaramide, un glycolmonostéarate, ou toute combinaison de ceux-ci, de préférence l'érucamide.

9. Composite de fibres selon l'une quelconque des revendications 1 à 8, dans lequel la composition de résine HDPE comprend 0,01 % en poids à 5 % en poids d'un polymère fluoré sur la base du poids total de la composition de résine HDPE, dans lequel le polymère fluoré présente une densité de 1,9 g/cm³ à 1,96 g/cm³, un point de fusion de 110 °C à 126 °C, et/ou un MFI de 5 à 25 g/10 min à 265 °C et 5 kg, tel que mesuré selon la norme ISO 1133.

10. Composite de fibres selon l'une quelconque des revendications 1 à 9, dans lequel la composition de résine HDPE présente un MFI de 9 à 90 g/10 min à 190 °C et 2,16 kg tel que mesuré selon la norme ISO 1133, et/ou une température de cristallinité de 122 °C à 133 °C conformément au procédé de mesure DSC tel que décrit dans la description.

11. Composite de fibres selon l'une quelconque des revendications 1 à 10, dans lequel le matériau fibreux est une fibre continue, de préférence une fibre continue de verre, de carbone, de céramique, d'aramide, de basalte ou une fibre polymère, ou toute combinaison de celles-ci.

12. Composite de fibres selon l'une quelconque des revendications 1 à 11, dans lequel le composite de fibres est une bande unidirectionnelle d'une épaisseur de 0,1 mm à 0,5 mm.

13. Procédé de fabrication du composite de fibres selon l'une quelconque des revendications 1 à 12, le procédé comprenant l'imprégnation de la composition de résine HDPE avec le matériau fibreux, dans lequel le procédé comprend de préférence le coulage de la composition de résine HDPE sur un lit mobile de fibres continues, dans lequel le lit mobile présente une vitesse de chaîne de 10 m/min à 15 m/min.
